# EUROPEAN PATENT APPLICATION

(11) **EP 2 947 419 A1**
(43) Date of publication of application: **25.11.2015**
(21) Application number: 14169460.4
(22) Date of filing: 22.05.2014
(51) Int. Cl.: G01B 17/02, G01B 3/28, G01N 29/04

(54) **Device for inspecting a surface of a wall**

(71) Applicant: Tanktechniek B.V., 1046 AA Amsterdam (NL); ID-Tec B.V., 2685 DC Poeldijk (NL)
(72) Inventor: Molhuijsen, Ronald Emile Joannes Marie, 1161 GD Zwanenburg (NL); Van der Valk, Ferry Petrus Maria, 2685 DC Poeldijk (NL)
(74) Representative: Mink-Lindenburg, Charlotte Hildegard

(57) **Abstract**

The invention relates to a device for inspecting a wall to locate a defect in a surface in the wall , comprising
a housing provided with a drive and means for propelling over the surface, control means for controlling the drive and first measuring means for measuring the thickness of the wall, characterized in that, the device further comprises camera means for imaging part of the surface, wherein a defect is present, and second measuring means for determining the remaining thickness of the wall at the location of the defect.

## Description

The present invention relates to a device according to the preamble of claim 1.

A device according to the preamble is known from US 7296488. The known system is arranged for inspecting ferrous surfaces to assess corrosive condition. More specifically the known system comprises a remotely controllable self-propelled vehicle for inspecting the interior of underground storage tanks. A cleaning and inspection module facilitates identification of defects in walls. First the tank surface is cleaned of deposits by rotary cutters and brushes. Ultrasonic transducer wall measurement is constantly taken and compared to a minimum thickness. If the measured thickness is below the minimum thickness the temporary position is marked as a defect.

The invention has for its object to provide a device according to the preamble of claim 1 that is universally suitable for locating defects on surfaces and determining the remaining wall thickness at the position of the defect. By defects holes or cracks or dents in all types of materials are meant, and in general all types of local damage reducing material thickness.

This object is achieved by the device according to claim 1.

Based on the remaining wall thickness at the position of the defect the lifetime of the wall and the structure to which it belongs can be established. By using the device according to the invention man entry of the structure can effectively be avoided. Advantageously, by using the device according to the invention removal of any (corrosive) build-up prior to measurement can be avoided.

In a first preferred embodiment of the device according to the invention, the second measuring means comprise an ultrasonic measuring means comprising an ultrasonic beam transmitter and an ultrasonic beam receiver, wherein the ultrasonic beam transmitter is arranged to transmit an ultrasonic beam into the wall at an angle between 30 and 70 degrees with respect to an underside of the housing, which underside is intended to propel substantially parallel to the surface during inspection and wherein the ultrasonic beam receiver is arranged to receive a reflected ultrasonic beam of the transmitted ultrasonic beam and wherein the ultrasonic measuring means are arranged to measure the elapsed time between transmitting an ultrasonic beam and receiving a reflected ultrasonic beam. These technical measures enable determination of the remaining thickness, since only a reflection of the transmitted ultrasonic beam is expected if a defect is present in the wall surface. Preferable, in order to determine that a reflection of the ultrasonic beam is caused by an end of a defect, the device can be moved during measurement.

In order to automate the determination of the remaining thickness of the wall, the first preferred embodiment of the device according to the invention comprises computer means to calculate the remaining thickness of the wall at the location of the defect based on output data from the camera means, which output data comprises information of the distance to the defect, and based on measurements from the ultrasonic measuring means.

In a second preferred embodiment of the device according to the invention, the second measuring means comprise a pin shaped element and an actuator for moving the element substantially transverse with respect to an underside of the housing, which underside is intended to propel substantially parallel to the surface during inspection, to insert a first end of the element into the defect. These technical measures allows for visual determination of the remaining wall thickness at the position of the defect. Preferable, the camera means are located such that at least a second end of the element remains visible during movement of the pin by the actuator and the camera means comprise quantifying means to quantify the amount of movement of the element in order to determine the depth of the defect.

The present invention also relates to a method for inspecting a wall surface.

The invention will now be explained by means of the attached drawings in wherein
Figure 1 shows a schematic view of a first preferred embodiment of a device according to the invention;

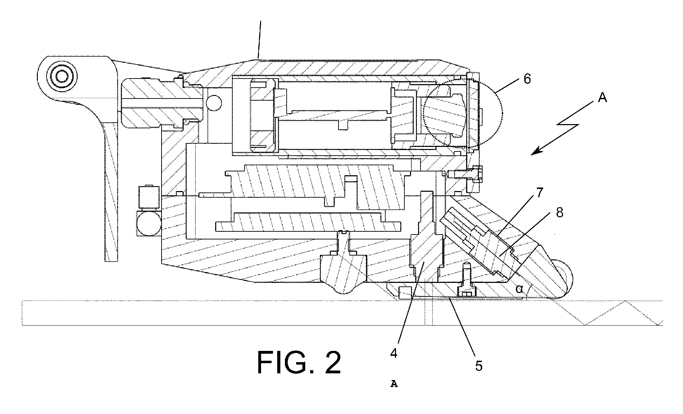

Figure 2 shows the device of figure 1 in a cross section view;
Figure 3 schematically illustrates the functioning of the first preferred embodiment;
Figure 4 shows a schematic view of a second preferred embodiment of a device according to the invention; and
Figure 5 shows a camera image to schematically illustrate the functioning of the second preferred embodiment.

Like components are designated in the figures by means of the same reference numerals.

The device according to the present invention will be elucidated by two preferred embodiments A;B designed for the purpose of inspecting interior wall surfaces of metal hollow structures, like storage tanks for fuel, to locate defects caused by pitting. Pitting is a form of corrosion wherein a small hole, or cavity, forms in metal.

Traditional storage tanks are made of steel and are vulnerable to corrosion. Additionally additives present in fuel nowadays can cause further damage to the wall surface. Once corrosion causes perforation, tank contents leak into the environment.

Inspection of storage tanks requires personnel to access the tank to visually assess the corrosive condition of the surface. Prior to man entry a man hole must be freed of earth and the stored fuel must be removed. Excavation is laborious and remaining residual fumes are potentially toxic. Consequently, as a precautionary measure, currently many existing tanks are replaced without inspection. Replacement involves high costs. Furthermore this procedure inevitably leads to destruction of capital.

The device according to the invention provides for inspection of closed hollow structures while avoiding the above disadvantages.

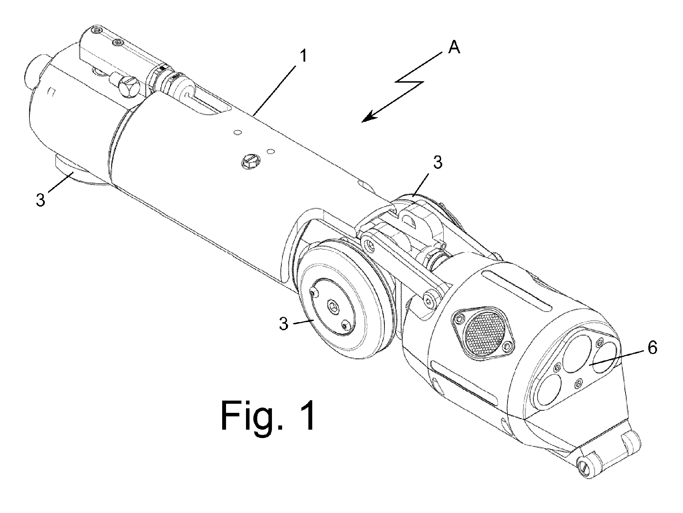

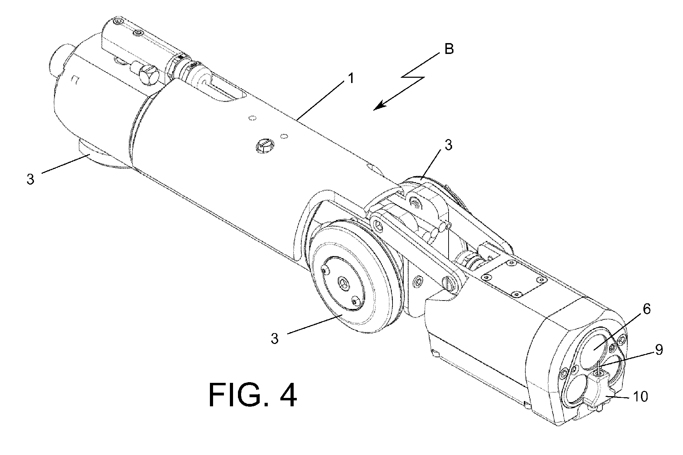

The first preferred embodiment A is shown in figure 1 and the second preferred embodiment B is shown in figure 4. Both embodiments A;B comprise a housing 1 provided with a drive and one or more wheels 3 for propelling over the surface to be inspected. The drive is preferably electric, pneumatic or hydraulic. Control means are present for controlling the drive.

First measuring means for measuring the thickness of the surface comprise a first ultrasonic probe 4. The first ultrasonic probe or sensor 4 is arranged substantially transverse to an underside 5 of the housing 1, which underside 5 is intended to propel substantially parallel to the surface during inspection. Consequently during use the first ultrasonic sensor 4 is arranged substantially transverse to the surface such that the sound waves reflect off the back of the wall and the wall thickness can be calculated based on the reflection time.

According to the invention the device further comprises camera means 6 for imaging part of the surface, wherein a defect is present. Preferably the camera means 6 comprise an infrared camera.

According to the invention second measuring means 7 are arranged for measuring thickness at the location of the defect to determine the remaining thickness of the wall at the location of the defect.

Both embodiments A;B comprise alternative types of second measuring means.

In the embodiment of figure 1 the second measuring means 7 comprise a second ultrasonic probe or sensor 8 arranged at an angle α between 30 and 70 degrees with respect to the underside 5 of the housing 1, and consequently to the surface during use.

The second ultrasonic sensor 8 is fixed under the camera. The second ultrasonic sensor 8 is provided with a plastic cover, which lies against the surface at the time of a measurement. Optionally a liquid is injected between the second sensor 8 and the surface.

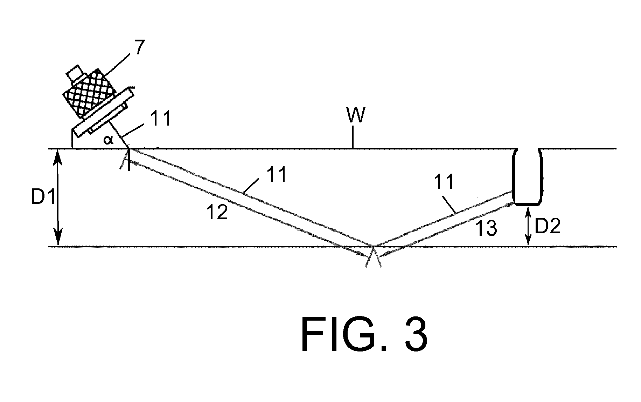

The device according to the first preferred embodiment A further comprises computer means to calculate the remaining thickness of the wall at the location of the defect based on data from the camera means 6 comprising information about the distance to the defect, data from the first ultrasonic sensor and data from the second ultrasonic sensor. The calculation is schematically illustrated in figure 3. The thickness D1 of the wall W is measured using the first ultrasonic sensor (not shown), preferably at a location on the wall without defects. Using the second ultrasonic sensor 8, an ultrasonic beam 1 is transmitted in the wall at a known angle α. At first, the transmitted beam 1 is reflected by the other side of the wall. Secondly, the reflected beam is also reflected by the defect back to the second ultrasonic sensor. The time Tm from transmitting the ultrasonic beam to receiving the reflected beam by the defect at the second ultrasonic sensor is measured.

Since the wall thickness and angle α are known, the length of leg 12 and the time T1 for an ultrasonic beam to travel over leg 12 can be calculated. By subtracting 2 * T1 from Tm, and dividing the result by 2, the time T2 can be derived, which is the time the ultrasonic beam travelled over leg 13. From T2 the length of leg 13 can be calculated. With these derived parameters and with simple goniometry, the thickness (D2) of the wall at the defect can be calculated.

In the first preferred embodiment A software is present to allow communication between the second sensor and the camera.

In the embodiment B of figure 4 the second measuring means comprise a pin shaped element 9 and an actuator 10 for moving the element 9 substantially transverse to the underside 5 of the housing 1, and consequently to the surface during use.

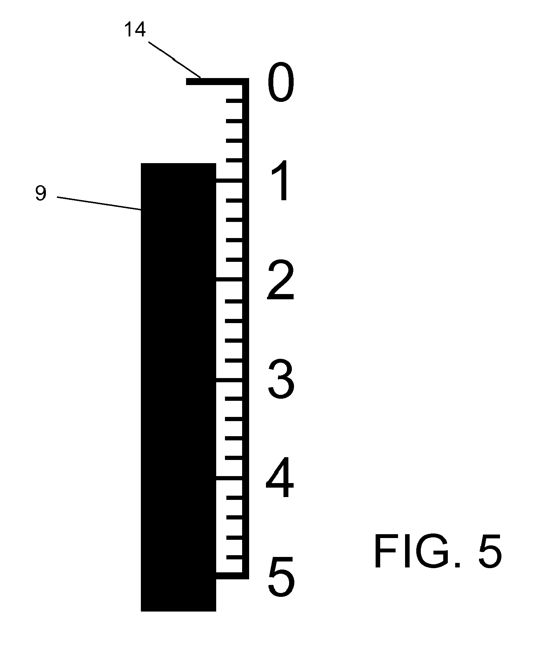

The actuator 10 is preferably pneumatically controlled. The pin 9 is biased by a spring in a direction away from the surface. The position of the other side of the pin 9 is located in front of the camera lens. In the camera image the stroke of the pen 9 remains visible. The determination of the length of the stroke is done with a scale 14 projected in the camera image. This scale may be calibrated in the image. An example thereof is shown in figure 5.

The length of the stroke represents the depth of the defect. In the second preferred embodiment B the remaining wall thickness at the position of the defect is determined indirectly by mechanically measuring the depth of the defect. The remaining wall thickness at the position of the defect can be determined by using the wall thickness measured by the first sensor 4 and subtracting the defect depth. Preferably the depth of the defect is visually read from the scale. A digital report can be generated comprising copies of the images as proof.

Both embodiments A;B aim at determining the remaining thickness of the wall at the location of the defect, i.e. the thickness of the undamaged part of the wall lying "behind" the defect. This can either be done directly, by determining the remaining thickness itself, or indirectly, by determining the depth of the defect.

It is noted that although the device according to the invention is shown and described for the purpose of inspecting metal storage tanks it is not limited thereto.

The device according to the invention is suitable for inspecting all types of surfaces in all orientations. A person skilled in the art will be able to adjust the propelling means to each type of surface. For instance magnetisable wheels can be chosen on ferrous surfaces.

The device according to the invention is especially suitable for inspecting hollow structures that are not accessable for human inspection other than (underground) storage tanks, such as floating roofs, windmills and pipes. The dimensions of the housing can be chosen such that the device can enter the openings with a diameter of 100mm that are usually present in such structures.

Additionally the device according to the invention is suitable for the remote inspection of other structures. These other structures include bridges, building frames, utility towers and the like.

It is therefore explicitly stated that the invention is not limited to the preferred embodiments described and shown herein. Especially all combinations of the preferred embodiments shown are included.

The invention therefore generally extends to any embodiment that falls within the scope of the appended claims as seen in the light of the foregoing description and drawings.

## Claims

1. Device (A;B) for inspecting a wall to locate a defect in a surface in the wall, comprising
a housing (1) provided with a drive and means for propelling over the surface (3), control means for controlling the drive and first measuring means for measuring the thickness of the wall (4), **characterized in that**, the device (A;B) further comprises camera means (6) for imaging part of the surface, wherein a defect is present, and second measuring means (7;9,10) for determining the remaining thickness of the wall at the location of the defect.

2. Device (A;B) according to claim 1, wherein the second measuring means (7) comprise an ultrasonic measuring means (8) comprising an ultrasonic beam transmitter and an ultrasonic beam receiver, wherein the ultrasonic beam transmitter is arranged to transmit an ultrasonic beam into the wall at an angle (α) between 30 and 70 degrees with respect to an underside (5) of the housing (1), which underside (5) is intended to propel substantially parallel to the surface during inspection and wherein the ultrasonic beam receiver is arranged to receive a reflected ultrasonic beam of the transmitted ultrasonic beam and wherein the ultrasonic measuring means (8) are arranged to measure the elapsed time between transmitting an ultrasonic beam and receiving a reflected ultrasonic beam.

3. Device (A;B) according to claim 2, wherein the device (A;B) further comprises computer means to calculate the remaining thickness of the wall at the location of the defect based on output data from the camera means (6), which output data comprises information of the distance to the defect, and based on measurements from the ultrasonic measuring means (8).

4. Device (A;B) according to claim 1, wherein the second measuring means (9,10) comprise a pin shaped element (9) and an actuator (1) for moving the element (9) substantially transverse with respect to an underside (5) of the housing (1), which underside (5) is intended to propel substantially parallel to the surface during inspection, to insert a first end of the element (9) into the defect.

5. Device (A;B) according to claim 4, wherein the camera means (6) are located such that at least a second end of the element (9) remains visible during movement of the element (9) by the actuator (10) and the camera means (6) comprise quantifying means to quantify the amount of movement of the element (9) in order to determine the depth of the defect.

6. Method for inspecting a wall surface, wherein the method comprises the following step:
a) locating a defect using camera means (6) for imaging part of the surface;
b) determining the wall thickness using first measuring means for measuring the thickness of the wall;
c) determining the remaining thickness of the wall at the location of the defect using second measuring means (7;9,10) for determining the remaining thickness of the wall and output data from the camera means (6).

7. Method according to claim 6, wherein in step c) the second measuring means (7) transmits an ultrasonic beam into the wall under a known angle of 30 and 70 degrees with respect to an underside (5) of the housing (1), which underside (5) is intended to propel substantially parallel to the surface during inspection and receive the reflected ultrasonic beam of the transmitted ultrasonic beam, wherein the elapsed time is measured between transmitting the ultrasonic beam and receiving a reflected ultrasonic beam and wherein the remaining thickness is determined using the determined wall thickness in step b), the known angle of transmission, and the elapsed time.

8. Method according to claim 6, wherein in step c) the second measuring means (9,10) use a pin, which is movable substantially transverse with respect to an underside (5) of the housing (1), wherein a first end of the pin is inserted into the defect and wherein a second end of the pin remains visible by the camera means (6), such that the depth of the defect can be determined using the camera means (6), and the remaining wall thickness can be determined by subtracting the determined depth of the defect from the wall thickness determined in step b).
